# FASCICULE DE BREVET EUROPEEN

(11) **EP 2 623 000 B1**
(45) Date de publication et mention de la délivrance du brevet: **11.03.2015**
(21) Numéro de dépôt: 13153734.2
(22) Date de dépôt: 01.02.2013
(51) Int. Cl.: A47J 43/07

(54) **Appareil électroménager de préparation culinaire prévu pour être tenu à la main**
Haushaltsgerät zur Essenszubereitung, das für das Halten in der Hand konzipiert ist
Household cooking appliance designed to be hand-held

(30) Priorité: 06.02.2012 FR 1251097
(43) Date de publication de la demande: 07.08.2013
(73) Titulaire: SEB S.A., 69130 Ecully (FR)
(72) Inventeur: Hamelin, Franck, 50490 Saint-Sauveur-Lendelin (FR)
(74) Mandataire: Bourrières, Patrice

(56) Documents cités:
- EP-A1- 1 483 997
- EP-A1- 2 335 533
- FR-A1- 2 921 243

## Description

La présente invention concerne le domaine technique général des appareils électroménagers de préparation culinaire tenus à la main comprenant un boîtier renfermant un moteur, tel qu'un boîtier moteur de mixeur plongeant, et un accessoire destiné à être accouplé à une extrémité inférieure du boîtier, le boîtier comportant une coquille supérieure et une coquille inférieure maintenues l'une sur l'autre au moyen d'une pièce de fixation s'engageant sur l'extrémité inférieure du boîtier, et se rapporte plus particulièrement à un appareil électroménager dans lequel la pièce de fixation comporte une surface d'appui contre laquelle l'accessoire vient s'appuyer lorsqu'il est accouplé au boîtier.

Il est connu, de la demande de brevet FR 2 921 243 déposée par la demanderesse, un mixeur plongeant comprenant un boîtier moteur comportant une coquille supérieure et une coquille inférieure maintenues l'une contre l'autre au moyen d'une pièce de fixation s'engageant sur l'extrémité inférieure du boîtier. Une telle pièce de fixation présente l'avantage de permettre un montage simple et économique des coquilles, tout en améliorant l'aspect visuel de l'appareil.

Toutefois, un tel appareil présente l'inconvénient de nécessiter un serrage important de l'accessoire sur l'extrémité inférieure du boîtier pour éviter la génération de bruits désagréables intervenant lorsque l'accessoire n'est pas parfaitement vissé sur le boîtier.

L'invention qui suit vise à pallier ces inconvénients en proposant un appareil électroménager de préparation culinaire dans lequel l'immobilisation, en position accouplée, de l'accessoire sur le boîtier moteur est améliorée et fiabilisée. Un autre but de la présente invention est de proposer un dispositif d'accouplement de l'accessoire sur le boîtier moteur qui soit simple à réaliser et qui procure une grande ergonomie d'utilisation.

Le but de l'invention est atteint par un appareil électroménager de préparation culinaire prévu pour être tenu à la main comprenant un boîtier renfermant un moteur et un accessoire destiné à être accouplé à une extrémité inférieure du boîtier, le boîtier comportant une coquille supérieure et une coquille inférieure maintenues l'une contre l'autre au moyen d'une pièce de fixation s'engageant sur l'extrémité inférieure du boîtier, la pièce de fixation comportant une surface d'appui contre laquelle l'accessoire vient s'appuyer lorsqu'il est accouplé au boîtier, **caractérisé en ce que** la surface d'appui est réalisée en matériau souple.

Une telle caractéristique présente l'avantage de permettre une déformation de la surface d'appui venant bord à bord avec l'accessoire, ce qui permet d'amortir les vibrations de l'accessoire et de contribuer au maintien de l'accessoire en position d'accouplement.

Par matériau souple on entend un matériau avec une dureté Shore A inférieure ou égale à 70 et préférentiellement inférieure ou égale à 50. En particulier, la dureté du matériau souple sera avantageusement adaptée pour qu'il se produise un écrasement de l'ordre de 0,3 mm au niveau de la surface d'appui lors de l'accouplement du pied de mixage sur le boitier.

Selon une autre caractéristique de l'invention, la surface d'appui est réalisée en matériau élastomère.

Selon une autre caractéristique de l'invention, l'accessoire est accouplé au boîtier par des moyens d'accouplement comportant des rampes de verrouillage munies de bossages.

Une telle caractéristique coopère avec la déformation de la surface d'appui pour assurer un verrouillage sûr et efficace des moyens d'accouplement sans que l'utilisateur n'ait à fournir un effort important lors de l'opération d'accouplement/désaccouplement de l'accessoire.

Selon d'autres modes particuliers de réalisation, l'appareil électroménager selon l'invention peut comprendre l'une ou plusieurs des caractéristiques suivantes prises isolément ou selon toutes les combinaisons techniquement possibles :
- la pièce de fixation comporte un diamètre interne présentant des éléments de verrouillage assurant l'immobilisation de la pièce de fixation sur le boîtier,
- les éléments de verrouillage sont constitués par des protubérances venant s'engager élastiquement dans des rainures ménagées sur les coquilles supérieure et inférieure du boîtier,

- la pièce de fixation comporte une âme rigide comportant une surface interne venant au contact des coquilles supérieure et inférieure du boîtier,
- l'âme rigide est réalisée en matériau plastique,
- la surface d'appui appartient à une peau souple recouvrant la périphérie externe de l'âme rigide,
- la peau souple déborde axialement de l'âme rigide,
- le boîtier comporte un élément de façade rapporté comprenant une surface externe définissant au moins une partie visible du boîtier, qui est maintenue sur le boîtier au moyen de la pièce de fixation, la pièce de fixation venant bord à bord avec l'élément de façade et comportant au moins une partie en matériau souple réalisant l'accostage avec l'élément de façade.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- la figure 1 est une vue de face un appareil électroménager selon un mode particulier de réalisation de l'invention, le boîtier moteur de l'appareil étant représenté accouplé à un pied de mixage ;
- la figure 2 est une vue en perspective du pied de mixage de la figure 1 représenté seul ;
- la figure 3 est une vue en perspective éclatée du boîtier moteur de la figure 1 ;
- Les figures 4A et 4B sont des vues en perspective du boîtier moteur de la figure 1 avec l'anneau de fixation respectivement en position désassemblée et assemblée ;
- La figure 5 est une vue en perspective de l'anneau de fixation ;
- La figure 6 est une vue en perspective éclatée de l'anneau de fixation de la figure 5.

Seuls les éléments nécessaires à la compréhension de l'invention ont été représentés. Pour faciliter la lecture des dessins, les mêmes éléments portent les mêmes références d'une figure à l'autre.

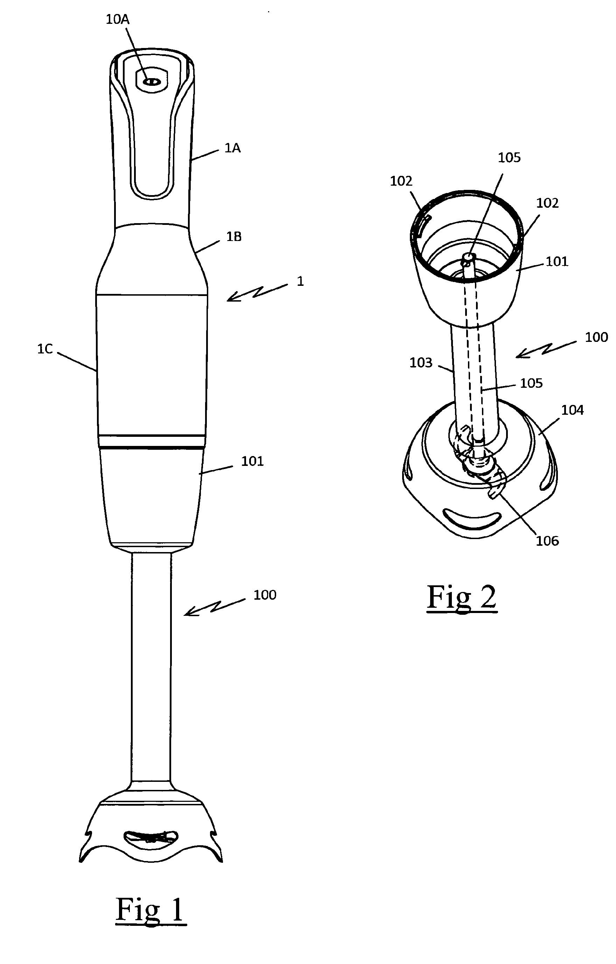

La figure 1 représente une vue de face d'un appareil électroménager, de type mixeur plongeant, comportant un boîtier 1 présentant un corps de forme allongée dont une extrémité longitudinale est accouplée de manière amovible à un pied de mixage 100, le corps du boîtier 1 présentant une partie supérieure 1A de plus faible diamètre constituant une zone de préhension.

Conformément à la figure 2, le pied de mixage 100 comporte des moyens d'accouplement avec le boîtier 1 comprenant une bague d'accouplement 101 munie de deux ergots de verrouillage 102, la bague d'accouplement 101 étant disposée à l'extrémité supérieure d'un fût tubulaire 103 comprenant une extrémité inférieure solidaire d'une cloche de protection 104 hémisphérique.

De manière connue en soi, le fût tubulaire 103 renferme un arbre d'entraînement 105 comportant une extrémité inférieure solidaire d'un outil coupant 106 s'étendant à l'intérieur de la cloche de protection 104 et une extrémité supérieure débouchant au sein de la bague d'accouplement 101.

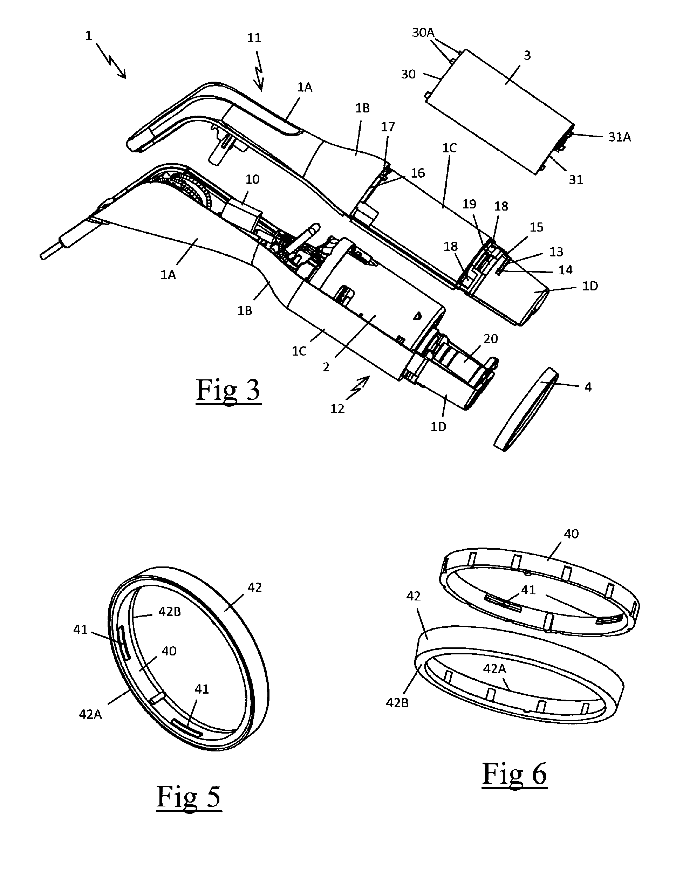

Conformément à la figure 3, le corps du boîtier 1 comprend une coquille supérieure 11 et une coquille inférieure 12 assemblées l'une sur l'autre au moyen d'un vis, non représenté sur les figures, reliant les deux coquilles 11, 12 au niveau de la partie supérieure 1A du boîtier, et d'un anneau de fixation 4 s'engageant sur l'extrémité inférieure du boîtier 1, les coquilles supérieure 11 et inférieure 12 étant préférentiellement réalisées par moulage dans un matériau thermoplastique de type ABS (Acrylonitrile Butadiène Styrène).

Le boîtier 1 présente une partie centrale 1C ventrue renfermant un moteur 2 électrique alimenté par un circuit de commande 10 disposé dans la partie supérieure 1A du boîtier, le circuit de commande 10 comprenant un bouton 10A, visible sur la figure 1, sur lequel l'utilisateur doit appuyer constamment pour faire fonctionner le moteur 2, ce bouton 10A étant avantageusement disposé au sommet de la zone de préhension du boîtier 1.

Le moteur 2 est relié à un entraîneur rotatif 20 s'étendant dans une partie inférieure 1D légèrement conique comprenant des moyens d'accouplement avec le pied de mixage 100, ces moyens d'accouplement étant constitués par deux rampes de verrouillage 13, disposées à 180° l'une de l'autre, faisant saillie sur la surface externe de la partie inférieure 1D, chaque rampe de verrouillage 13 comportant une extrémité d'engagement munie d'un bossage 14 et une extrémité terminale munie d'une butée 15.

De manière avantageuse, le boîtier 1 comporte un élément de façade 3 rapporté qui vient se positionner sur le boîtier 1, cet élément de façade 3 étant disposé au niveau d'une empreinte de forme complémentaire ménagée sur la partie centrale 1C de la coquille supérieure 11.

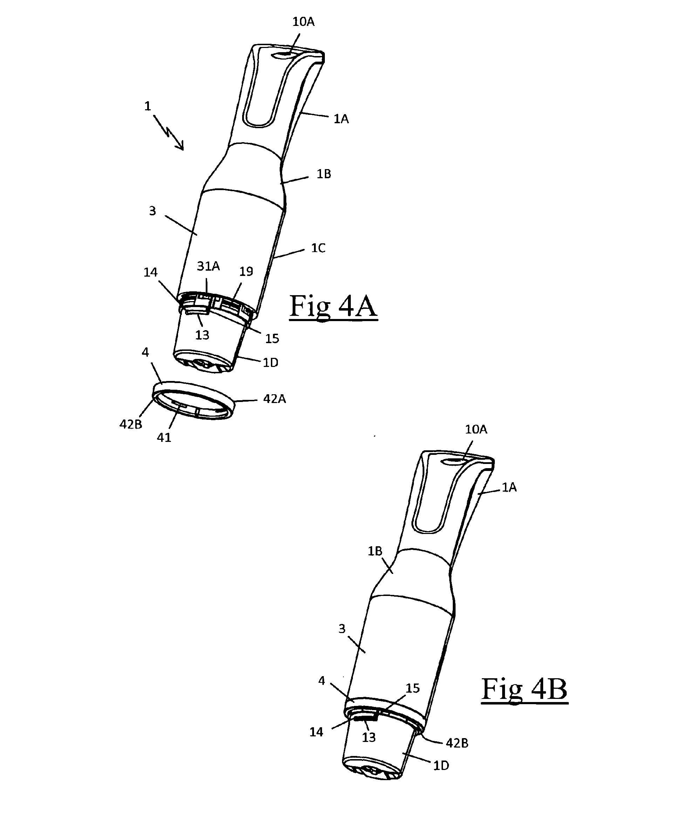

Conformément à la figure 4A, l'élément de façade 3 rapporté vient combler l'empreinte de la coquille supérieure 11 et présente un bord supérieur 30 venant bord à bord avec une partie intermédiaire 1B du boîtier 1, sensiblement conique, s'étendant entre la partie centrale 1C et la partie supérieure 1A.

De manière préférentielle, l'élément de façade 3 comporte une surface externe venant dans le prolongement de la surface externe de la partie intermédiaire 1 B de la coquille supérieure 11, cette dernière étant avantageusement constituée par un revêtement élastomère thermoplastique de type SEBS (copolymère à blocs styrène-éthylène-butylène) obtenu par surmoulage sur le matériau ABS de la coquille supérieure 11 du boîtier et comportant un bord inférieur 16 en matériau élastomère venant au contact de l'élément de façade 3 rapporté.

Le bord supérieur 30 de l'élément de façade 3 comprend des doigts 30A en saillie qui viennent s'engager dans des orifices 17 ménagés au niveau de la partie centrale 1C de la coquille supérieure 11, en bordure du bord de la partie intermédiaire 1B, ces doigts 30A assurant l'immobilisation du bord supérieur 30 de l'élément de façade 3 sur la coquille supérieure 11 selon une direction radiale au boîtier 1.

L'élément de façade 3 est maintenu sur le boîtier 1 au moyen de l'anneau de fixation 4, ce dernier venant bord à bord avec un bord inférieur 31 de l'élément de façade 3. L'élément de façade 3 comprend des doigts 31A en saillie venant s'engager dans des cavités 18 ménagées dans la coquille supérieure 11 du boîtier, en bordure de la partie inférieure 1D et sous l'anneau de fixation 4, ainsi que cela est illustré sur la figure 4B, de sorte que l'anneau de fixation 4 assure à fois le blocage axial de l'élément de façade 3 sur la coquille supérieure 11 et l'immobilisation du bord inférieur 31 de l'élément de façade 3 selon une direction radiale au boîtier 1.

Conformément aux figures 5 et 6, l'anneau de fixation 4 comprend une âme rigide 40 annulaire, avantageusement réalisée en matériau plastique ABS, comportant une surface interne venant au contact des coquilles supérieure 11 et inférieure 12 du boîtier pour assurer le maintien de ces dernières l'une contre l'autre. L'âme rigide 40 comporte des protubérances de verrouillage 41 faisant saillie sur la surface interne de l'anneau de fixation 4 et venant s'engager élastiquement dans des rainures 19 ménagées sur la coquille supérieure 11 pour immobiliser axialement l'anneau de fixation 4 sur le boîtier 1 dans une position de verrouillage, illustrée sur la figure 4B, dans laquelle l'élément de façade 3 est bloqué axialement en étant pris en sandwich entre l'anneau de fixation 4 et le bord inférieur 16 de la partie intermédiaire 1B.

Plus particulièrement selon l'invention, l'anneau de fixation 4 comporte une surface d'appui 42B réalisée en matériau souple contre laquelle le pied de mixage 100 vient s'appuyer lorsqu'il est accouplé au boîtier 1.

Cette surface d'appui 42B recouvre l'extrémité axiale inférieure de l'âme rigide 40 et est préférentiellement obtenue par surmoulage d'un matériau élastomère thermoplastique de type SEBS sur l'âme rigide 40.

De manière avantageuse, la surface d'appui 42B appartient à une peau 42 en matériau souple, représentée dissociée de l'âme rigide 40 sur la figure 6, qui recouvre la périphérie externe de l'âme rigide 40, la peau 42 comportant une surface externe venant dans le prolongement de la surface externe de l'élément de façade 3 lorsque l'anneau de fixation 4 est amené sur le boîtier 1 dans la position de verrouillage.

La peau 42 souple comporte une lèvre supérieure 42A qui déborde axialement de l'âme rigide 40 du côté opposé à la surface d'appui 42B annulaire, et qui réalise l'accostage avec l'élément de façade 3 lorsque l'anneau de fixation 4 est immobilisé sur le boîtier 1 dans la position de verrouillage de sorte que l'élément de façade 3 est pris axialement en sandwich en étant comprimé entre la lèvre supérieure 42A de l'anneau de fixation 4 et le bord inférieur 16 de la partie intermédiaire 1B recouvert de matériau élastomère.

Il s'ensuit une parfaite immobilisation de l'élément de façade 3 grâce à la pression permanente exercée axialement par la lèvre supérieure 42A sur l'élément de façade 3, et une réduction du bruit généré par la vibration de l'élément de façade 3 lors du fonctionnement du moteur 2. De plus, l'absence de jeu en bordure de l'élément de façade 3 permet d'éviter l'insertion de salissures. Enfin, l'âme rigide 40 de l'anneau de fixation 4 présente l'avantage d'assurer un parfait maintien de la coquille supérieure 11 sur la coquille inférieure 12 au niveau de la partie inférieure du boîtier 1.

Le boîtier 1 ainsi réalisé est accouplé au pied de mixage 100, ainsi que cela est illustré sur la figure 1, en amenant la bague d'accouplement 101 du pied de mixage 100 sur la partie inférieure 1D du boîtier 1 de telle sorte que l'extrémité supérieure de l'arbre d'entraînement 105 s'engage dans l'entraîneur rotatif 20 du boîtier 1 et que le bord supérieur de la bague d'accouplement 101 vienne en butée contre la surface d'appui 42B annulaire souple de l'anneau de fixation 4.

Le pied de mixage 100 est alors tourné de quelques degrés sur lui-même pour amener les ergots 102 de la bague d'accouplement 101 sur les rampes de verrouillage 13 de la partie inférieure 1D du boîtier, cette opération s'effectuant en comprimant légèrement la surface d'appui 42B annulaire souple de l'anneau de fixation 4. Le verrouillage du pied de mixage 100 en position accouplée s'effectue alors en tournant le pied de mixage 100 jusqu'à ce que les ergots 102 parviennent contre la butée 15 des rampes de verrouillage 13, les ergots 102 se trouvant alors engagés derrière les bossages 14 et assurant l'immobilisation en rotation du pied de mixage 100, cette immobilisation étant renforcée par les forces de friction générées par l'appui sous contrainte du bord supérieur de la bague d'accouplement 101 contre la peau 42 souple de l'anneau de fixation 4.

On obtient ainsi un verrouillage simple et efficace du pied de mixage sur le boîtier, la surface d'appui souple de l'anneau de fixation travaillant en combinaison avec les bossages des rampes de verrouillage pour offrir un verrouillage sûr et ergonomique. De plus, la compression de la surface d'appui souple de l'anneau de fixation par le pied de mixage permet l'obtention d'une liaison boîtier-pied de mixage sans jeu limitant la génération de bruits lors du fonctionnement de l'appareil.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'anneau de fixation pourra être réalisé intégralement dans un matériau souple.

Ainsi dans une autre variante de réalisation non représentée, les rampes de verrouillage du boîtier moteur pourront être remplacées par un système de type pas de vis tel que décrit dans la demande de brevet FR 2 921 243.

## Revendications

1. Appareil électroménager de préparation culinaire prévu pour être tenu à la main comprenant un boîtier (1) renfermant un moteur (2) et un accessoire (100) destiné à être accouplé à une extrémité inférieure du boîtier (1), le boîtier (1) comportant une coquille supérieure (11) et une coquille inférieure (12) maintenues l'une contre l'autre au moyen d'une pièce de fixation (4) s'engageant sur l'extrémité inférieure du boîtier (1), la pièce de fixation (4) comportant une surface d'appui (42B) contre laquelle l'accessoire (100) vient s'appuyer lorsqu'il est accouplé au boîtier (1), **caractérisé en ce que** la surface d'appui (42B) est réalisée dans un matériau avec une dureté shore A inférieure ou égale à 70.

2. Appareil électroménager selon la revendication 1, **caractérisé en ce que** ladite surface d'appui (42B) est réalisée en matériau élastomère.

3. Appareil électroménager selon l'une quelconque des revendications 1 à 2, l'accessoire (100) est accouplé au boîtier (1) par des moyens d'accouplement comportant des rampes de verrouillage (13) munies de bossages (14).

4. Appareil électroménager selon l'une quelconque des revendications 1 à 3, **caractérisé en ce que** la pièce de fixation (4) comporte un diamètre interne présentant des éléments de verrouillage (41) assurant l'immobilisation de la pièce de fixation (4) sur le boîtier (1).

5. Appareil électroménager selon la revendication 4, **caractérisé en ce que** lesdits éléments de verrouillage sont constitués par des protubérances (41) venant s'engager élastiquement dans des rainures (19) ménagées sur les coquilles supérieure et inférieure du boîtier.

6. Appareil électroménager selon l'une quelconque des revendications 1 à 5, **caractérisé en ce que** la pièce de fixation (4) comporte une âme rigide (40) comportant une surface interne venant au contact des coquilles supérieure (11) et inférieure (12) du boîtier.

7. Appareil électroménager selon la revendication 6, **caractérisé en ce que** l'âme rigide (40) est réalisée en matériau plastique.

8. Appareil électroménager selon l'une quelconque des revendications 6 à 7, **caractérisé en ce que** la surface d'appui (42B) appartient à une peau (42) réalisée dans un matériau avec une dureté shore A inférieure ou égale à 70 recouvrant la périphérie externe de l'âme rigide (40).

9. Appareil électroménager selon la revendication 8, **caractérisé en ce que** ladite peau (42) déborde axialement de l'âme rigide (40).

10. Appareil électroménager selon l'une quelconque des revendications 1 à 9, **caractérisé en ce que** le boîtier (1) comporte un élément de façade (3) rapporté comprenant une surface externe définissant au moins une partie visible du boîtier (1), qui est maintenue sur le boîtier (1) au moyen de la pièce de fixation (4), ladite pièce de fixation (4) venant bord à bord avec l'élément de façade (3) et comportant au moins une partie (42A) réalisée dans un matériau avec une dureté shore A inférieure ou égale à 70 réalisant l'accostage avec l'élément de façade (3).

11. Appareil électroménager selon l'une quelconque des revendications 1 à 9, **caractérisé en ce que** la surface d'appui (42B) est réalisée dans un matériau avec une dureté Shore A inférieure ou égale à 50.

## Patentansprüche

1. Elektrohaushaltsgerät zur Zubereitung von Speisen, das dazu bestimmt ist, in der Hand gehalten zu werden, mit einem Gehäuse (1), in dem ein Motor (2) untergebracht ist, und mit einem Zubehör (100), das dazu bestimmt ist, mit einem unteren Ende des Gehäuses (1) verkoppelt zu werden, wobei das Gehäuse (1) eine obere Verschalung (11) und eine untere Verschalung (12) umfasst, die mithilfe eines Befestigungsteils (4) aneinander gehalten werden, welches am unteren Ende des Gehäuses (1) eingreift, wobei das Befestigungsteil (4) eine Auflagefläche (42B) umfasst, an der das Zubehör (100) aufliegt, wenn es mit dem Gehäuse (1) verkoppelt ist, **dadurch gekennzeichnet, dass** die Auflagefläche (42B) aus einem Material mit einer Shore-Härte A von maximal 70 gefertigt ist.

2. Elektrohaushaltsgerät nach Anspruch 1, **dadurch gekennzeichnet, dass** die genannte Auflagefläche (42B) aus Elastomermaterial besteht.

3. Elektrohaushaltsgerät nach einem der Ansprüche 1 bis 2, **dadurch gekennzeichnet, dass** das Zubehör (100) mithilfe von Kupplungsmitteln mit dem Gehäuse (1) verkoppelt ist, welche mit Sperrkanten (13) versehen sind, die Erhebungen (14) aufweisen.

4. Elektrohaushaltsgerät nach einem der Ansprüche 1 bis 3, **dadurch gekennzeichnet, dass** das Befestigungsteil (4) einen Innendurchmesser aufweist, der Verriegelungselemente (41) umfasst, die die Unbeweglichkeit des Befestigungsteils (4) am Gehäuse (1) sicherstellen.

5. Elektrohaushaltsgerät nach Anspruch 4, **dadurch gekennzeichnet, dass** die genannten Verriegelungselemente aus Vorsprüngen (41) bestehen, die elastisch in die Einkerbungen (19) eingreifen, die an der oberen und unteren Verschalung des Gehäuses vorgesehen sind.

6. Elektrohaushaltsgerät nach einem der Ansprüche 1 bis 5, **dadurch gekennzeichnet, dass** das Befestigungsteil (4) einen starren Steg (40) mit einer Innenfläche aufweist, die an der oberen (11) und unteren Verschalung (12) des Gehäuses anliegt.

7. Elektrohaushaltsgerät nach Anspruch 6, **dadurch gekennzeichnet, dass** der starre Steg (40) aus Kunststoff hergestellt ist.

8. Elektrohaushaltsgerät nach einem der Ansprüche 6 bis 7, **dadurch gekennzeichnet, dass** die Auflagefläche (42B) zu einer Hülle (42) gehört, die aus einem Material mit einer Shore-Härte A von maximal 70 gefertigt ist und die Außenseite des starren Steges (40) umhüllt.

9. Elektrohaushaltsgerät nach Anspruch 8, **dadurch gekennzeichnet, dass** die genannte Hülle (42) in Längsrichtung vorsteht.

10. Elektrohaushaltsgerät nach einem der Ansprüche 1 bis 9, **dadurch gekennzeichnet, dass** das Gehäuse (1) ein aufgestecktes Frontelement (3) mit einer Außenfläche umfasst, die mindestens einen sichtbaren Teil des Gehäuses (1) abgrenzt, wobei es mithilfe des Befestigungsteils (4) am Gehäuse (1) gehalten wird und wobei das genannte Befestigungsteil (4) mit seinem Rand genau am Rand des Frontelements (3) anliegt und mindestens ein Teil (42A) umfasst, das aus einem Material mit einer Shore-Härte A von maximal 70 gefertigt ist und mit dem die Ankopplung an das Frontelement (3) erfolgt.

11. Elektrohaushaltsgerät nach einem der Ansprüche 1 bis 9, **dadurch gekennzeichnet, dass** die Auflagefläche (42B) aus einem Material mit einer Shore-Härte A von maximal 50 gefertigt ist.

## Claims

1. Food preparation household electrical appliance planned to be held in the hand comprising a housing (1) containing a motor (2) and an accessory (100) designed to be coupled to a lower end of the housing (1), the housing (1) comprising an upper shell (11) and a lower shell (12) held against each other by means of a fastening part (4) engaging on the lower end of the housing (1), the fastening part (4) having a bearing surface (42B) against which the accessory (100) rests when it is coupled to the housing (1), **characterised in that** the bearing surface (42B) is made of a material of Shore A hardness less than or equal to 70.

2. Household electrical appliance according to claim 1, **characterised in that** said bearing surface (42B) is made of elastomer material.

3. Household electrical appliance according to claim 1 or 2, **characterised in that** the accessory (100) is coupled to the housing (1) by coupling means comprising locking ramps (13) provided with projections (14).

4. Household electrical appliance according to any of claims 1 to 3, **characterised in that** the fastening part (4) has an inner diameter having locking elements (41) immobilising the fastening part (4) on the housing (1).

5. Household electrical appliance according to claim 4, **characterised in that** said locking elements consist of projections (41) which engage resiliently in grooves (19) formed on the upper and lower shells of the housing.

6. Household electrical appliance according to any of claims 1 to 5, **characterised in that** the fastening part (4) comprises a rigid core (40) having an inner surface coming into contact with the upper (11) and lower (12) shells of the housing.

7. Household electrical appliance according to claim 6, **characterised in that** the rigid core (40) is made of plastic material.

8. Household electrical appliance according to claim 6 or 7, **characterised in that** the bearing surface (42B) belongs to a skin (42) made of a material of Shore A hardness less than or equal to 70 covering the outer periphery of the rigid core (40).

9. Household electrical appliance according to claim 8, **characterised in that** said skin (42) projects axially from the rigid core (40).

10. Household electrical appliance according to any of claims 1 to 9, **characterised in that** the housing (1) comprises an added front element (3) comprising an outer surface defining at least a visible part of the housing (1), which is secured to the housing (1) by means of the fastening part (4), said fastening part (4) coming flush with the front element (3) and comprising at least one part (42A) made of a material of Shore A hardness less than or equal to 70 forming the junction with the front element (3).

11. Household electrical appliance according to any of claims 1 to 9, **characterised in that** the bearing surface (42B) is made of a material of Shore A hardness less than or equal to 50.
